# EUROPÄISCHE PATENTSCHRIFT

(11) **EP 0 681 432 B1**
(45) Veröffentlichungstag und Bekanntmachung des Hinweises auf die Patenterteilung: **31.07.1996**
(21) Anmeldenummer: 94900804.9
(22) Anmeldetag: 11.11.1993
(51) Int. Cl.: A23C 9/15, A01J 11/10

(54) **VERFAHREN UND ANLAGE ZUR REGULIERUNG DES FETTGEHALTES VON MILCH UND RAHM**
PROCESS AND SYSTEM FOR REGULATING THE FAT CONTENT OF MILK AND CREAM
PROCEDE ET INSTALLATION POUR REGLER LA TENEUR EN MATIERES GRASSES DU LAIT ET DE LA CREME

(30) Priorität: 27.01.1993 DE 4302165
(43) Veröffentlichungstag der Anmeldung: 15.11.1995
(73) Patentinhaber: Westfalia Separator AG, D-59302 Oelde (DE)
(72) Erfinder: ZETTIER, Karl-Heinz, D-59302 Ölde (DE)
(86) Internationale Anmeldenummer: EP9303162
(87) Internationale Veröffentlichungsnummer: WO9416571

(56) Entgegenhaltungen:
- EP-A- 0 545 053
- WO-A-90/00862
- AT-A- 378 103
- FR-A- 2 316 650

## Beschreibung

Die Erfindung betrifft ein Verfahren zur Regulierung des Fettgehaltes von Milch und Rahm, bei dem Vollmilch mittels einer Zentrifuge in fettreichen Rahm und fettfreie Milch aufgeteilt wird, wobei der aus der Zentrifuge ablaufende Rahm über eine Regeleinrichtung hinsichtlich seiner Zusammensetzung konstant gehalten wird und mit Hilfe von Regeleinrichtungen aus der fettfreien Milch durch Zugabe von Rahm standardisierte Milch und aus dem fettreichen Rahm durch Zugabe von Milch standardisierter Rahm erzeugt wird.

Ein derartiges Verfahren ist aus der AT 378 103 bekannt. Zwecks Einstellung des Fettgehaltes wird dem Rahm ein Teilstrom der standardisierten Milch zugemischt. Häufig muß jedoch standardisierte Milch mit unterschiedlichem Fettgehalt hergestellt werden. Die Einstellung eines anderen Fettgehaltes führt zu einem Ansprechen der entsprechenden Regeleinrichtungen im Produktstrom der standardisierten Milch. Da sich der Fettgehalt im Teilstrom der standardisierten Milch, die dem Rahm beigemischt wird, auch ändert, muß auch die Regeleinrichtung, die diesen Teilstrom regelt, aktiv werden, damit der Fettgehalt des Rahmes konstant bleibt. Durch diese gegenseitige Beeinflussung der Regeleinrichtungen kommt es über einen längeren Zeitraum zu einer instabilen Situation im Regelverhalten mit dadurch hervorgerufenen Schwankungen der Fettwerte in den beiden Produktströmen.

Aus der FR-A-2 316 650 ist ein Verfahren bekannt, bei dem ebenfalls eine Standardisierung des Rahmes durch Vermischung des aus der Zentrifuge ablaufenden Rahmes mit bereits standardisierter Milch erfolgt. Hierbei treten daher ebenfalls die vorgenannten Probleme auf.

Es ist weiterhin aus der WO-A-90 00862 bekannt, standardisierte Milch durch Vermischung der aus der Zentrifuge ablaufenden fettfreien Milch mit bereits standardisiertem Rahm herzustellen. Bei diesem Verfahren beeinflußt eine Änderung des Fettgehaltes des standardisierten Rahmes daher ebenfalls sofort den zuvor eingestellten Fettgehalt der standardisierten Milch.

Aufgabe der vorliegenden Erfindung ist es, ein Verfahren aufzuzeigen, bei dem keine gegenseitige Beeinflussung der Regeleinrichtungen vorhanden ist.

Diese Aufgabe wird dadurch gelöst, daß der aus der Zentrifuge ablaufende Produktstrom der fettfreien Milch hinsichtlich seiner Zusammensetzung über eine Regeleinrichtung konstant gehalten wird und zur Regulierung des Fettgehaltes dem Rahm fettfreie Milch zugesetzt wird.

Da die Zusammensetzung der fettfreien Milch konstant gehalten wird, hat die Änderung des Fettgehaltes der standardisierten Milch keinen Einfluß auf den Fettgehalt des standardisierten Rahmes. Die Regeleinrichtung für den standardisierten Rahm spricht daher auf die Änderung des Fettgehaltes der standardisierten Milch nicht an.

Bei einer vorteilhaften Ausgestaltung wird die Dichte der fettfreien Milch und des standardisierten Rahmes in derselben Meßeinrichtung in Meßintervallen ermittelt. Der bei jedem Meßintervall gemessene Wert der fettfreien Milch wird mit einem gespeicherten Wert verglichen und erst bei einer Abweichung der Werte voneinander der zuletzt gemessene Wert anstelle des bisher gespeicherten Wertes gespeichert. Die Zufuhrmenge der fettfreien Milch wird jetzt so gesteuert, daß sich eine der Abweichung entsprechende veränderte Dichtedifferenz zwischen der fettfreien Milch und dem standardisierten Rahm einstellt, die dem gewünschten Fettgehalt in dem standardisierten Rahm entspricht. Es wird somit keine konstante Dichtedifferenz zwischen der fettfreien Milch und dem standardisierten Rahm als Steuergröße verwendet, sondern es wird bei jedem Meßintervall festgestellt, ob diese Dichtedifferenz noch mit der zuvor gemessenen Dichte der fettfreien Milch korrespondiert. Falls dies nicht der Fall ist, wird eine entsprechende Korrektur im Rechner vorgenommen. Durch dieses Verfahren kann die erzielte Genauigkeit bei der Einstellung des Fettgehaltes im standardisierten Rahm erheblich gesteigert werden.

Vorteilhafte Ausgestaltungen einer Anlage zur Durchführung des Verfahrens sind den restlichen Unteransprüchen zu entnehmen.

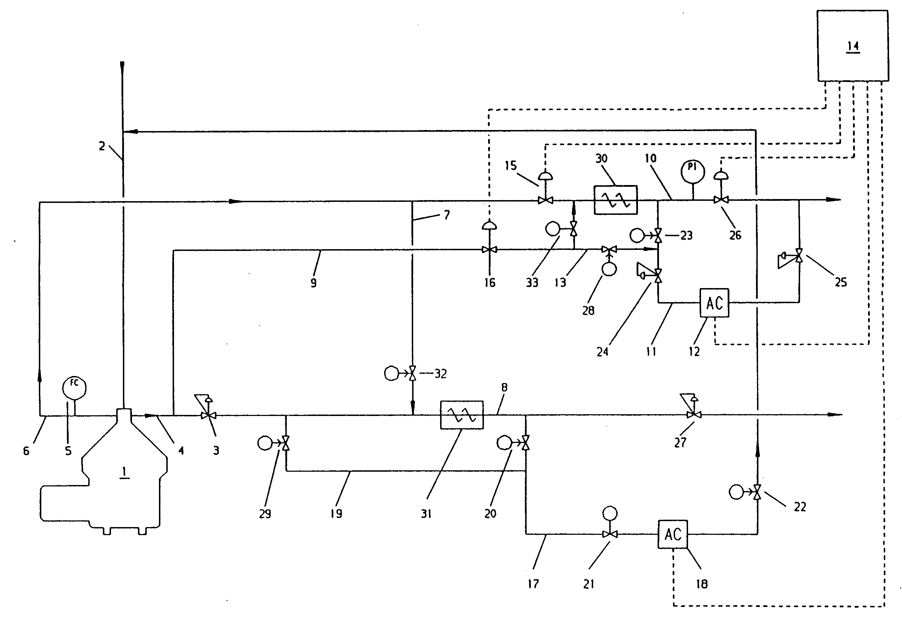

Ein Ausführungsbeispiel der Erfindung ist in der Zeichnung dargestellt und wird nachstehend näher erläutert.

Die Zentrifuge 1 besitzt eine Zulaufleitung 2 für die Vollmilch, eine mit einer Druckregeleinrichtung 3 versehene Ablaufleitung 4 für die fettfreie Milch und eine mit einer Mengenregeleinrichtung 5 versehenen Rahmablaufleitung 6, von der eine erste Mischleitung 7 abzweigt, die sich mit der Ablaufleitung 4 für fettfreie Milch zu einer Leitung 8 für standardisierte Milch verbindet. Von der Ablaufleitung 4 für die fettfreie Milch zweigt eine zweite Mischleitung 9 ab, die sich mit der Rahmablaufleitung 6 zu einer Leitung 10 für den standardisierten Rahm verbindet. Die Leitung 10 ist mit einer Bypassleitung 11 versehen, in der eine Meßeinrichtung 12 angeordnet ist. Die Bypassleitung 11 ist über eine Verbindungsleitung 13 mit der zweiten Mischleitung 9 verbunden. Die Meßeinrichtung 12 ist mit einer Steuereinheit 14 verbunden, die ihrerseits mit einem Regelventil 15 in der Rahmablaufleitung 6 und einem Regelventil 16 in der zweiten Mischleitung 9 in Verbindung steht. Von der Leitung 8 führt eine Rückführleitung 17 mit einer darin vorgesehenen Meßeinrichtung 18 zur Zulaufleitung 2. Die Rückführleitung 17 ist über eine Leitung 19 mit der Ablaufleitung 4 für die fettfreie Milch verbunden. Mit den Ventilen 20 bis 29 und 33 kann der Durchfluß der entsprechenden Leitungen reguliert oder abgesperrt werden.

Die Vollmilch wird der Zentrifuge 1 über die Zulaufleitung 2 zugeführt und in fettfreie Milch und fettreichen Rahm separiert. Die Zusammensetzung der fettfreien Milch und des fettreichen Rahmes wird über die Druckregeleinrichtung 3 und die Mengenregeleinrichtung 5 konstant gehalten.

Zunächst wird der Fettgehalt der standardisierten Milch durch Einstellen der über die erste Mischleitung 7 zugeführten Menge Rahm in die Ablaufleitung 4 für die fettfreie Milch mittels Steuereinheit 14 und Regelventil 15 geregelt. Der Regelvorgang läuft dabei in ähnlicher Weise ab, wie dies nachfolgend für die Regulierung des Rahmes beschrieben ist. Bei jeder Änderung des Fettgehaltes der standardisierten Milch wird immer zuerst dieser Produktstrom geregelt und die Regelung des standardisierten Rahmes durch die Steuereinheit 14 während dieses Vorganges unterdrückt. Dadurch wird eine gegenseitige Beeinflussung der Regelkreise durch momentane Durchflußänderungen vermieden.

Zur Regulierung des Fettgehaltes des Rahmes wird durch die Steuereinheit 14 zunächst Ventil 23 geschlossen und Ventil 28 geöffnet, wodurch ein Teilstrom fettfreie Milch über die zweite Mischleitung 9 und die Verbindungsleitung 13 in die Bypassleitung 11 geleitet wird. Die Dichte der fettfreien Milch wird durch die Meßvorrichtung 12 ermittelt. Der gemessene Dichtewert wird in der Steuereinheit 14 gespeichert und diesem gespeicherten Wert ein Differenzwert zugeordnet. Danach schließt die Steuereinheit 14 Ventil 28 und öffnet Ventil 23 wieder.

Über die Steuereinheit 14 und das Regelventil 16 in der zweiten Mischleitung 9 wird dem fettreichen Rahm in der Rahmablaufleitung 6 nun soviel fettfreie Milch beigemischt, daß die Dichte des standardisierten Rahmes in der Leitung 10, die durch die Meßvorrichtung 12 überwacht wird, dem vorgenannten Differenzwert entspricht. Diese Einstellung wird zunächst beibehalten, bis nach einem vorgegebenen Zeitintervall eine erneute Messung der fettfreien Milch nach entsprechender Umschaltung der Ventile 23 und 28 durch die Steuereinheit 14 erfolgt.

Hat sich der Dichtewert für die fettfreie Milch nicht verändert, so bleibt der gespeicherte Wert weiterhin die Basis für die Einstellung des Regelventiles 16. Wird aber eine Abweichung zum zuvor gemessenen Dichtewert der fettfreien Milch festgestellt, so wird nun dieser Wert gespeichert, dem eine geänderte Dichtedifferenz zugeordnet ist, und das Regelventil 16 von der Steuereinheit 14 entsprechend verstellt, um diese neue Dichtedifferenz herzustellen.

Da die Regelung des Fettgehaltes des standardisierten Rahmes durch Zumischung der fettfreien Milch erfolgt, die ihre konstante Zusammensetzung auch bei den nachgeschalteten Regelvorgängen der standardisierten Milch beibehält, beeinflussen sich die beiden Regelvorgänge nicht. Dadurch wird ein sehr schnelles Regelverhalten erreicht.

Zur intensiven Vermischung der fettfreien Milch mit dem über die erste Mischleitung 7 zugeführten Rahm sowie des Rahmes mit der über die zweite Mischleitung 9 zugeführten fettfreien Milch sind Mischer 30 und 31 vorgesehen.

## Patentansprüche

1. Verfahren zur Regulierung des Fettgehaltes von Milch und Rahm, bei dem Vollmilch mittels einer Zentrifuge in fettreichen Rahm und fettfreie Milch aufgeteilt wird, wobei der aus der Zentrifuge ablaufende Rahm über eine Regeleinrichtung hinsichtlich seiner Zusammensetzung konstant gehalten wird und mit Hilfe von Regeleinrichtungen aus der fettfreien Milch durch Zugabe von Rahm standardisierte Milch und aus dem fettreichen Rahm durch Zugabe von Milch standardisierter Rahm erzeugt wird, **dadurch gekennzeichnet**, daß der aus der Zentrifuge ablaufende Produktstrom der fettfreien Milch hinsichtlich seiner Zusammensetzung über eine Regeleinrichtung konstant gehalten wird und zur Regulierung des Fettgehaltes dem Rahm fettfreie Milch zugesetzt wird.

2. Verfahren nach Anspruch 1, dadurch gekennzeichnet, daß die Dichte der fettfreien Milch und des standardisierten Rahmes in derselben Meßeinrichtung in Meßintervallen ermittelt wird, der bei jedem Meßintervall gemessene Wert der fettfreien Milch mit einem gespeicherten Wert verglichen und erst bei einer Abweichung der Werte voneinander der zuletzt gemessene Wert anstelle des bisher gespeicherten Wertes gespeichert und die Zufuhrmenge der fettfreien Milch jetzt so gesteuert wird, daß sich eine der Abweichung entsprechende veränderte Dichtedifferenz zwischen der fettfreien Milch und dem standardisierten Rahm einstellt, die dem gewünschten Fettgehalt in dem standardisierten Rahm entspricht.

3. Anlage zur Durchführung des Verfahrens nach Anspruch 1 oder 2, mit einer eine Zulaufleitung (2) für Vollmilch, eine Ablaufleitung (4) für die fettfreie Milch und eine Rahmablaufleitung (6) aufweisenden Zentrifuge (1) und mit einer die Rahmablaufleitung (6) mit der Ablaufleitung (4) für die fettfreie Milch verbindenden Mischleitung (7), wobei die Rahmableitung (6) eine Regeleinrichtung (5) enthält, um die Zusammensetzung des Rahms konstant zu halten, dadurch gekennzeichnet, daß die Ablaufleitung (4) für die fettfreie Milch eine Regeleinrichtung (3) beinhaltet, um die Zusammensetzung der fettfreien Milch konstant zu halten, und über eine zweite, mit einem Regelventil (16) versehene Mischleitung (9) mit der Rahmablaufleitung (6) verbunden ist, wobei eine Steuereinheit (14) vorgesehen ist, die mit einem Regelventil (15) in der Rahmablaufleitung (6) und mit einem Regelventil (16) in der zweiten Mischleitung (9) in Verbindung steht.

## Claims

1. Process for regulating the fat content of milk and cream in which whole milk is separated in a centrifuge into cream with a high fat content and fat-free milk, whereby the composition of the cream discharging from the centrifuge is kept constant by means of a regulating device and further regulating devices are used to produce standardized milk from the fat-free milk by the addition of cream and to produce standardized cream from the cream with a high fat content by the addition of milk, **characterised in that** the composition of the fat-free milk discharging from the centrifuge is kept constant by means of a regulating device and that fat-free milk is added to the cream to regulate the fat content.

2. Process according to claim 1, characterised in that the density of the fat-free milk and the standardized cream are determined in the same measuring device at measuring intervals, the value of the fat-free measured at each interval is compared with a stored value and only when there is a deviation between the two values is the last measured value stored instead of the previously stored value and the feed volume of the fat-free milk controlled in such a way that a density difference between the fat-free milk and the standardized cream is adjusted which corresponds to the desired fat content in the standardized cream.

3. Installation for executing the process according to claim 1 or 2 with a centrifuge (1) equipped with a feed line (2) for whole milk, a discharge line (4) for the fat-free milk and a cream discharge line (6), the installatin additionally being provided with a mixing line (7) connecting the cream discharge line (6) with the discharge line (4) for the fat-free milk, whereby the cream discharge line (6) contains a regulating device (5) to keep the composition of the cream constant, characterised in that the discharge line (4) for the fat-free milk contains a regulating device (3) to keep the composition of the fat-free milk constant and which is connected to the cream discharge line (6) via a second mixing line (9) provided with a regulating valve (16), whreby a control unit (14) is provided which is connected to a regulating valve (15) in the cream discharge line (6) and to a regulating valve (16) in the second mixing line (9).

## Revendications

1. Procédé de réglage de la teneur en graisse de lait et de crème, dans lequel du lait entier est séparé en crème riche en graisse et en lait exempt de graisse grâce à une centrifugeuse, la composition de la crème sortant de la centrifugeuse étant maintenue constante, du lait standardisé étant obtenu à partir du lait exempt de graisse en ajoutant de la crème, et de la crème standardisée étant obtenue à partir de la crème riche en graisse en ajoutant du lait exempt de graisse grâce à des dispositifs de réglage, **caractérisé en ce que** la composition du lait exempt de graisse quittant la centrifugeuse est maintenue constante grâce à un dispositif de réglage, du lait exempt de graisse est ajouté à la crème dans le but de régler la teneur en graisse de celle-ci.

2. Procédé selon revendication 1, caractérisé en ce que les densités du lait exempt de graisse et de la crème standardisée sont mesurées à l'aide du même dispositif et aux intervalles identiques, la valeur mesurée dans le lait exempt de graisse mesurée étant chaque fois comparée avec une valeur mémorisée, la valeur récente n'étant mémorisée au lieu de celle se trouvant en mémoire qu'en cas d'une déviation entre les deux valeurs, le débit d'admission de lait exempt de graisse étant alors commandé de telle manière qu'il s'établisse une différence entre les densités du lait exempt de graisse et de la crème standardisée correspondant à la déviation constatée, la différence de densités devant correspondre à la teneur en graisse souhaitée de la crème standardisée.

3. Installation permettant la réalisation du procédé selon l'une des revendications 1 ou 2, comportant une centrifugeuse (1) ayant une conduite d'alimentation (2) de lait entier, une conduite d'écoulement (4) de lait exempt de graisse et une conduite de mélange (7) reliant la conduite d'écoulement de crème (6) et la conduite d'écoulement de lait exempt de graisse (4), la conduite de crème (6) comportant un dispositif de réglage (5) permettant de maintenir constante la composition de la crème, caractérisée en ce que la conduite d'écoulement (4) du lait exempt de graisse possède un dispositif de réglage (3) permettant de maintenir constante la composition du lait exempt de graisse, et qu'elle est reliée à la conduite d'écoulement de crème (6) par l'intermédiaire d'une deuxième conduite de mélange (9) comportant une vanne de réglage (16), une unité de commande (14) étant prévue dans le but de communiquer avec une vanne de réglage (15) dans la conduite d'écoulement de crème (6) et avec une vanne de réglage (16) dans la deuxième conduite de mélange.
